# EUROPEAN PATENT APPLICATION

(11) **EP 4 029 832 A1**
(43) Date of publication of application: **20.07.2022**
(21) Application number: 20862728.1
(22) Date of filing: 09.09.2020
(51) Int. Cl.: C01G 25/02, B01D 53/94, B01J 23/63, B01J 32/00

(54) **POWDERED COMPLEX OXIDE CONTAINING ELEMENTAL CERIUM AND ELEMENT ZIRCONIUM, EXHAUST GAS PURIFICATION CATALYST COMPOSITION USING SAME, AND METHOD FOR PRODUCING SAME**

(30) Priority: 10.09.2019 JP 2019164776
(71) Applicant: Mitsui Mining & Smelting Co., Ltd., Shinagawa-ku Tokyo 141-8584 (JP)
(72) Inventor: WATANABE, Satoshi, Ageo-shi, Saitama 362-0025 (JP); SATO, Takahiro, Ageo-shi, Saitama 362-0025 (JP); INAMURA, Masaaki, Ageo-shi, Saitama 362-0025 (JP); IWAKURA, Hironori, Ageo-shi, Saitama 362-0025 (JP)
(74) Representative: Novagraaf Technologies
(86) International application number: PCT/JP2020/034100
(87) International publication number: WO 2021/049525

(57) **Abstract**

An object of the present invention is to provide a powder of a CeO₂-ZrO₂-based complex oxide which enables to achieve an improvement in the purification performance at a low to middle temperature of an exhaust gas purification catalyst, and, in order to achieve the above-mentioned object, the present invention provides a powder of a CeO₂-ZrO₂-based complex oxide, wherein a pore volume with from-10-to-100-nm diameters after a heat treatment performed at 1,000°C for 3 hours in an air atmosphere, is 0.35 mL/g or more, and wherein an amount of carbon dioxide desorbed after the heat treatment, as measured by a temperature programmed desorption method, is 80 µmol/g or more.

## Description

### BACKGROUND OF THE INVENTION

### Field of the Invention

The present invention relates to: a powder of a complex oxide containing cerium element (Ce) and zirconium element (Zr) (hereinafter referred to as "CeO₂-ZrO₂-based complex oxide"); an exhaust gas purification catalyst composition including the powder and a noble metal element; an exhaust gas purification catalyst including the powder and a noble metal element supported on the powder; and a method of producing the powder.

### Background Art

Exhaust gas emitted from an internal combustion engine of an automobile, a motorcycle or the like contains harmful components, such as hydrocarbons (HC), carbon monoxide (CO) and nitrogen oxide (NOx). As an exhaust gas purification catalyst that purifies and detoxifies these harmful components, a three-way catalyst having a catalytic activity to oxidize HC and CO and convert them to water and carbon dioxide, as well as to reduce NOx and convert it to nitrogen, has been used.

To mitigate fluctuations in the oxygen concentration in the exhaust gas and to efficiently purify HC, CO, NOx and the like, a material having an oxygen storage capacity (OSC), such as a powder of a CeO₂-ZrO₂-based complex oxide, has been used as a constituent material of a three-way catalyst.

A method is known in which a coprecipitation product (precipitates) is allowed to form from a raw material liquid containing a cerium salt and a zirconium salt by a coprecipitation method, and the resulting coprecipitation product is calcined, as a method of producing a powder of a CeO₂-ZrO₂-based complex oxide. Water is usually used as a solvent for a raw material liquid.

For example, Patent Document 1 discloses a method in which a coprecipitation product is allowed to form from an aqueous solution containing cerium nitrate, zirconium nitrate, neodymium nitrate and lanthanum nitrate, by a coprecipitation method, and the resulting coprecipitation product is calcined at 1,000°C for 3 hours in an air atmosphere to produce a powder of a CeO₂-ZrO₂-based complex oxide.

Patent Document 2 discloses a method in which a coprecipitation product is allowed to form from an aqueous solution containing cerium nitrate, zirconium oxynitrate, lanthanum nitrate and yttrium nitrate, by a coprecipitation method, and the resulting coprecipitation product is calcined at 800°C for 5 hours in an air atmosphere to produce a powder of a CeO₂-ZrO₂-based complex oxide.

Patent Document 3 discloses a method in which a coprecipitation product is allowed to form from an aqueous solution containing a basic-zirconium-sulfate-containing slurry, cerium nitrate, lanthanum nitrate and neodymium nitrate, by a coprecipitation method, and the resulting coprecipitation product is calcined at 600°C for 5 hours in an air atmosphere to produce a powder of a CeO₂-ZrO₂-based complex oxide. In Patent Document 3, the basic-zirconium-sulfate-containing slurry is produced by placing an aqueous solution of zirconium oxychloride in an autoclave, setting the pressure to 2 × 10⁵ Pa and the temperature to 120°C, and then adding a sulfatization agent (such as sodium sulfate and ammonium sulfate). Patent Document 3 discloses that it is essential to set the temperature of the aqueous solution of zirconium oxychloride to 100°C or higher, in order to allow a sulfatization reaction by the sulfatization agent to proceed.

Exhaust emission regulations are becoming increasingly strict in recent years. Regarding an exhaust gas purification catalyst for an internal combustion engine, not only the purification performance at a high temperature (for example, the temperature during steady operation at a high speed) when the catalyst is sufficiently warmed, but also the purification performance at a low to middle temperature (for example, the temperature at the initial stage after the start of operation) when the catalyst is not sufficiently warmed, are strongly demanded.

It is contemplated that an increase in the pore volume of a powder of a CeO₂-ZrO₂-based complex oxide leads to an improvement in the exhaust gas diffusivity in the powder of the CeO₂-ZrO₂-based complex oxide, and also to an improvement in the purification performance at a low to middle temperature of an exhaust gas purification catalyst obtained by using the powder. However, it is necessary that the pore volume of the powder of the CeO₂-ZrO₂-based complex oxide is retained even after being exposed to a high temperature. That is, the heat resistance of the pore volume is required.

The heat resistance of the pore volume of the powder of the CeO₂-ZrO₂-based complex oxide has been examined, for example, in Patent Document 3. Taking into consideration the fact that a noble metal can be supported in a well dispersed manner, in pores each having a diameter of 10 to 100 nm, Patent Document 3 examines the heat resistance of the total volume of the pores each having a diameter of 10 to 100 nm after a heat treatment performed at 1,000°C for 3 hours in an air atmosphere. In addition, Patent Document 3 discloses: a CeO₂-ZrO₂-based complex oxide composed of 72% by weight of zirconium oxide, 21% by weight of cerium oxide, 2% by weight of lanthanum oxide and 5% by weight of neodymium oxide, wherein the total volume of the pores each having a diameter of 10 to 100 nm after the heat treatment is 0.47 mL/g (total pore volume: 0.82 mL/g, volume ratio of pores each having a diameter of 10 to 100 nm: 57%); and a CeO₂-ZrO₂-based complex oxide composed of 45% by weight of zirconium oxide, 45% by weight of cerium oxide, 3% by weight of lanthanum oxide and 7% by weight of praseodymium oxide, wherein the total volume of the pores each having a diameter of 10 to 100 nm after the heat treatment is 0.26 mL/g (total pore volume: 0.79 mL/g, volume ratio of pores each having a diameter of 10 to 100 nm: 33%).

The CeO₂-ZrO₂-based complex oxide is a solid base catalyst, and basic sites are involved in the catalytic activity thereof (for example, the purification activity of reducing NOx and converting it to nitrogen). A temperature programmed desorption (TPD) method has been performed as a common characterization to examine the amount or the strength of the basic sites in a solid base catalyst. The temperature programmed desorption method is a method in which probe molecules (such as molecules of carbon dioxide) are allowed to adsorb on a solid sample, and then the amount of desorbed gas generated by continuously raising the temperature is measured.

### Citation List

### Patent Documents

Patent Document 1: JP 2010-227739 A
Patent Document 2: JP 2015-112553 A
Patent Document 3: JP 2008-081392 A

### SUMMARY OF THE INVENTION

### Technical Problem

An object of the present invention is to provide: a powder of a CeO₂-ZrO₂-based complex oxide which enables to achieve an improvement in the purification performance at a low to middle temperature of an exhaust gas purification catalyst; an exhaust gas purification catalyst composition including the powder and a noble metal element; an exhaust gas purification catalyst including the powder and a noble metal element supported on the powder; and a method of producing the powder.

### Solution to Problem

The present inventors have found out that, by: obtaining a first cake from a slurry, wherein the slurry is obtained from a raw material liquid containing a cerium salt and a zirconium salt by a coprecipitation method; treating the first cake with an alcohol-containing liquid to obtain a second cake having an adjusted alcohol concentration; and calcining the second cake to produce a powder of a CeO₂-ZrO₂-based complex oxide, it is possible to adjust a pore volume with from-10-to-100-nm diameters after a heat treatment performed at 1,000°C for 3 hours in an air atmosphere, and an amount of carbon dioxide desorbed after the heat treatment, as measured by a temperature programmed desorption method.

Specifically, the present inventors have found out that it is possible to produce a CeO₂-ZrO₂-based complex oxide, wherein a pore volume with from-10-to-100-nm diameters after a heat treatment performed at 1,000°C for 3 hours in an air atmosphere, is 0.35 mL/g or more, and wherein an amount of carbon dioxide desorbed after the heat treatment, as measured by a temperature programmed desorption method, is 80 µmol/g or more, by: obtaining a first cake from a slurry, wherein the slurry is obtained from a raw material liquid containing a cerium salt and a zirconium salt by a coprecipitation method; treating the first cake with an alcohol-containing liquid to obtain a second cake having an alcohol concentration of 60% by volume or more; and calcining the second cake.

Further, the present inventors have found out that it is possible to improve the purification performance at a low to middle temperature (for example, at a temperature of 200 to 600°C) of an exhaust gas purification catalyst, by using a powder of a CeO₂-ZrO₂-based complex oxide, wherein a pore volume with from-10-to-100-nm diameters after a heat treatment performed at 1,000°C for 3 hours in an air atmosphere, is 0.35 mL/g or more, and wherein an amount of carbon dioxide desorbed after the heat treatment, as measured by a temperature programmed desorption method, is 80 µmol/g or more.

The present invention has been completed based on the findings described above, and includes the following inventions.
[1] A powder of a complex oxide containing cerium and zirconium elements,
   wherein a pore volume with from-10-to-100-nm diameters after a heat treatment performed at 1,000°C for 3 hours in an air atmosphere, is 0.35 mL/g or more, and
   wherein an amount of carbon dioxide desorbed after the heat treatment, as measured by a temperature programmed desorption method, is 80 µmol/g or more.
[2] The powder according to [1], wherein the powder has an average particle size D50 of 30 µm or less.
[3] The powder according to [1] or [2], wherein the powder has an average particle size D90 of 60 µm or less.
[4] The powder according to any one of [1] to [3], wherein the powder has a bulk density of 0.40 g/mL or less.
[5] The powder according to any one of [1] to [4], wherein the complex oxide contains one or two or more rare earth elements other than cerium element.
[6] The powder according to [5], wherein the total content of the one or two or more rare earth elements other than cerium element, in terms of oxides, is 0.1% by mass or more and 40% by mass or less, based on the mass of the powder.
[7] An exhaust gas purification catalyst composition, including:
   the powder according to any one of [1] to [6], and;
   a noble metal element.
[8] An exhaust gas purification catalyst, including:
   the powder according to any one of [1] to [6]; and
   a noble metal element supported on the powder.
[9] A method of producing the powder according to any one of [1] to [6], the method including the steps of:
   (a) obtaining a first cake from a slurry, wherein the slurry is obtained from a raw material liquid containing a cerium salt and a zirconium salt by a coprecipitation method;
   (b) treating the first cake with an alcohol-containing liquid to obtain a second cake having an alcohol concentration of 60% by volume or more; and
   (c) calcining the second cake at a temperature of 600 to 900°C.

### Advantageous Effects of Invention

The present invention provides: a powder of a CeO₂-ZrO₂-based complex oxide, wherein a pore volume with from-10-to-100-nm diameters after a heat treatment performed at 1,000°C for 3 hours in an air atmosphere, is 0.35 mL/g or more, and wherein an amount of carbon dioxide desorbed after the heat treatment, as measured by a temperature programmed desorption method, is 80 µmol/g or more; an exhaust gas purification catalyst composition including the powder and a noble metal element; an exhaust gas purification catalyst including the powder and a noble metal element supported on the powder; and a method of producing the powder. The use of the powder according to the present invention enables to improve the purification performance at a low to middle temperature (for example, at a temperature of 200 to 600°C) of an exhaust gas purification catalyst.

### DETAILED DESCRIPTION OF THE INVENTION

The present invention will now be described in specific detail. In the present invention, the expression "numerical value A to numerical value B" means numerical value A or more and numerical value B or less, unless otherwise defined.

### << Composition of Powder >>

The powder according to the present invention is made of a complex oxide containing cerium element (Ce) and zirconium element (Zr) (hereinafter referred to as "CeO₂-ZrO₂-based complex oxide"). In other words, a plurality of particles constituting the powder according to the present invention are each made of the CeO₂-ZrO₂-based complex oxide. A certain particle and another particle contained in the powder according to the present invention may be made of the CeO₂-ZrO₂-based complex oxides having the same composition, or may be made of the CeO₂-ZrO₂-based complex oxides having different compositions.

In the CeO₂-ZrO₂-based complex oxide, it is preferred that cerium oxide (Ce₂O) and zirconium oxide (ZrO₂) form a solid solution phase. Each of cerium oxide and zirconium oxide may form a single phase (a cerium oxide single phase or a zirconium oxide single phase), in addition to the solid solution phase.

The content of cerium element in terms of cerium oxide and the content of zirconium element in terms of zirconium oxide are adjusted, taking into consideration the properties (such as the oxygen storage capacity (capacity to absorb and release oxygen), the pore volume with from-10-to-100-nm diameters after the heat treatment, the amount of carbon dioxide desorbed after the heat treatment, the average particle size D50, the average particle size D90, the bulk density and the like) that are required for the powder according to the present invention.

The content of cerium element in terms of cerium oxide is preferably 5.0% by mass or more and 90% by mass or less, more preferably 10% by mass or more and 80% by mass or less, and still more preferably 10% by mass or more and 70% by mass or less, based on the mass of the powder according to the present invention, from the viewpoint that the oxygen storage capacity of the CeO₂-ZrO₂-based complex oxide can be further improved.

The content of zirconium element in terms of zirconium oxide is preferably 5.0% by mass or more and 90% by mass or less, more preferably 10% by mass or more and 80% by mass or less, still more preferably 20% by mass or more and 80% by mass or less, yet still more preferably 30% by mass or more and 80% by mass or less, yet still more preferably 40% by weight or more and 60% by weight or less, yet still more preferably 42% by weight or more and 58% by weight or less, and yet still more preferably 45% by weight or more and 55% by weight or less, based on the mass of the powder according to the present invention, from the viewpoint that the heat resistance of the CeO₂-ZrO₂-based complex oxide can be further improved.

The ratio of the content of zirconium element in terms of zirconium oxide to the content of cerium element in terms of cerium oxide (the content of zirconium element in terms of zirconium oxide / the content of cerium element in terms of cerium oxide) is preferably 0.5 or more and 10 or less, more preferably 0.8 or more and 8.0 or less, and still more preferably 1.0 or more and 5.0 or less, from the viewpoint that the oxygen storage capacity and the heat resistance of the CeO₂-ZrO₂-based complex oxide can be achieved at high levels in a balanced manner.

The CeO₂-ZrO₂-based complex oxide may or may not contain, but preferably contains one or two or more metal elements other than cerium and zirconium elements. The one or two or more metal elements other than cerium and zirconium elements, or oxides thereof may form a solid solution phase along with cerium oxide and/or zirconium oxide, or may each form a single phase.

The total content of the one or two or more metal elements other than cerium and zirconium elements, in terms of oxides, is adjusted, taking into consideration the properties (such as the oxygen storage capacity (capacity to absorb and release oxygen), the pore volume with from-10-to-100-nm diameters after the heat treatment, the amount of carbon dioxide desorbed after the heat treatment, the average particle size D50, the average particle size D90, the bulk density and the like) that are required for the powder according to the present invention.

The one or two or more metal elements other than cerium and zirconium elements are selected, for example, from rare earth elements other than cerium element, and from alkaline earth metal elements. The one or two or more metal elements other than cerium and zirconium elements are preferably selected from rare earth elements other than cerium element.

The total content of the one or two or more metal elements selected from rare earth elements other than cerium element, in terms of oxides, is preferably 1.0% by mass or more and 40% by mass or less, more preferably 2.0% by mass or more and 30% by mass or less, and still more preferably 5.0% by mass or more and 20% by mass or less, based on the mass of the powder according to the present invention.

The total content of the one or two or more metal elements selected from alkaline earth metal elements, in terms of oxides, is preferably 1.0% by mass or more and 20% by mass or less, more preferably 1.0% by mass or more and 15% by mass or less, and still more preferably 1.0% by mass or more and 10% by mass or less, based on the mass of the powder according to the present invention.

The total of the content of the one or two or more metal elements selected from rare earth elements other than cerium element, in terms of oxides, and the content of the one or two or more metal elements selected from alkaline earth metal elements, in terms of oxides, is preferably 1.0% by mass or more and 40% by mass or less, more preferably 2.0% by mass or more and 30% by mass or less, and still more preferably 5.0% by mass or more and 20% by mass or less, based on the mass of the powder according to the present invention.

Examples of the rare earth element other than cerium element include yttrium element (Y), praseodymium element (Pr), scandium element (Sc), lanthanum element (La), neodymium element (Nd), samarium element (Sm), europium element (Eu), gadolinium element (Gd), terbium element (Tb), dysprosium element (Dy), holmium element (Ho), erbium element (Er), thulium element (Tm), ytterbium element (Yb), lutetium element (Lu) and the like. Among these, lanthanum, neodymium, praseodymium, yttrium, scandium and ytterbium elements and the like are preferred, and lanthanum, neodymium, praseodymium and yttrium elements and the like are more preferred. Oxides of rare earth elements excluding praseodymium and terbium elements are sesqui oxides (Re₂O₃, wherein Re represents a rare earth element). Praseodymium oxide is usually Pr₆O₁₁ and terbium oxide is usually Tb₄O₇. The rare earth element other than cerium element, or an oxide thereof may form a solid solution phase along with cerium oxide and/or zirconium oxide, or may form a single phase.

The content of lanthanum element in terms of lanthanum oxide is preferably 1.0% by mass or more and 40% by mass or less, more preferably 1.0% by mass or more and 30% by mass or less, and still more preferably 1.0% by mass or more and 20% by mass or less, based on the mass of the powder according to the present invention.

The content of neodymium element in terms of neodymium oxide is preferably 1.0% by mass or more and 40% by mass or less, more preferably 1.0% by mass or more and 30% by mass or less, and still more preferably 1.0% by mass or more and 20% by mass or less, based on the mass of the powder according to the present invention.

The content of praseodymium element in terms of praseodymium oxide is preferably 1.0% by mass or more and 40% by mass or less, more preferably 1.0% by mass or more and 30% by mass or less, and still more preferably 1.0% by mass or more and 20% by mass or less, based on the mass of the powder according to the present invention.

Examples of the alkaline earth metal element include calcium element (Ca), strontium element (Sr), barium element (Ba), radium element (Ra) and the like. Among these, calcium, strontium and barium elements and the like are preferred, calcium and strontium elements and the like are more preferred.

The CeO₂-ZrO₂-based complex oxide is composed of oxygen element, two or more metal elements including cerium and zirconium elements, and unavoidable impurities (such as a trace amount of hafnium contained in a material used as a zirconium source). The mass of the CeO₂-ZrO₂-based complex oxide and the contents of metal oxides can be determined by measuring the amounts of elements in a solution obtained by dissolving the CeO₂-ZrO₂-based complex oxide by alkali fusion or the like, in accordance with a conventional method such as inductively coupled plasma atomic emission spectrophotometry (ICP-AES), and calculating from the measured amounts of elements.

### << Properties of Powder After Heat Treatment >>

Of the properties of the powder according to the present invention, the properties after the heat treatment will now be described. The powder according to the present invention can have the following properties. The heat treatment for the powder according to the present invention is performed at 1,000°C for 3 hours in an air atmosphere.

### < Pore Volume with From-10-To-100-nm Diameters after Heat Treatment >

The pore volume with from-10-to-100-nm diameters (mL/g) after the heat treatment refers to the total volume (mL) of pores each having a diameter of 10 to 100 nm per 1 g of the powder after the heat treatment. The pore volume with from-10-to-100-nm diameters after the heat treatment is measured in accordance with the method described in Examples, after performing the heat treatment on the powder according to the present invention.

The pore volume with from-10-to-100-nm diameters after the heat treatment is 0.35 mL/g or more. Therefore, the powder according to the present invention has an excellent exhaust gas diffusivity even after being exposed to a high temperature, and an exhaust gas purification catalyst including the powder according to the present invention and a noble metal element supported on the powder according to the present invention can exhibit an excellent purification performance at a low to middle temperature (for example, at a temperature of 200 to 600°C).

The pore volume with from-10-to-100-nm diameters after the heat treatment is preferably 0.40 mL/g or more, and more preferably 0.45 mL/g or more. A larger pore volume with from-10-to-100-nm diameters after the heat treatment leads to a higher exhaust gas diffusivity after being exposed to a high temperature, resulting in an improvement in the purification performance at a low to middle temperature of the exhaust gas purification catalyst.

The upper limit value of the pore volume with from-10-to-100-nm diameters after the heat treatment is usually 1.0 mL/g, and preferably 0.7 mL/g, but not particularly limited thereto.

The pore volume with from-10-to-100-nm diameters after the heat treatment can be adjusted by adjusting the alcohol concentration in the second cake in the method of producing the powder according to the present invention, which is described later. For example, the pore volume with from-10-to-100-nm diameters after the heat treatment can be adjusted to 0.35 mL/g or more by adjusting the alcohol concentration in the second cake to 60% by volume or more. It is noted that the pore volume with from-10-to-100-nm diameters after the heat treatment tends to increase, as the alcohol concentration in the second cake increases.

### < Amount of Carbon Dioxide Desorbed After Heat Treatment >

The amount (µmol/g) of carbon dioxide desorbed after the heat treatment is the amount (µmol) of carbon dioxide desorbed per 1 g of the powder after the heat treatment. The amount of carbon dioxide desorbed after the heat treatment is measured by the method (temperature programmed desorption (TPD) method) described in Examples, after performing the heat treatment on the powder according to the present invention. The temperature programmed desorption method is a method in which probe molecules (molecules of carbon dioxide in the present invention) are allowed to adsorb on a solid sample, and then the amount of desorbed gas generated by continuously raising the temperature is measured, and is a common characterization performed in order to examine the amount or the strength of basic sites in a solid base catalyst.

The amount of carbon dioxide desorbed after the heat treatment is 80 µmol/g or more. Therefore, the amount or the strength of basic sites in the powder according to the present invention are sufficient even after being exposed to a high temperature, and an exhaust gas purification catalyst including the powder according to the present invention and a noble metal element supported on the powder according to the present invention can exhibit an excellent purification performance at a low to middle temperature (for example, at a temperature of 200 to 600°C).

The amount of carbon dioxide desorbed after the heat treatment is preferably 85 µmol/g or more, more preferably 90 µmol/g or more, and still more preferably 95 µmol/g or more. A larger amount of carbon dioxide desorbed leads to a larger amount or strength of the basic sites, resulting in an increase in the purification performance of reducing NOx and converting it to nitrogen.

However, when an amount or strength of the basic sites is too large, acidic substances, such as sulfur and the like, are more easily adsorbed, making the catalyst more susceptible to catalyst poisons. Therefore, the upper limit value of the amount of carbon dioxide desorbed after the heat treatment is preferably 150 µmol/g, more preferably 130 µmol/g, and still more preferably 120 µmol/g.

The amount of carbon dioxide desorbed after the heat treatment can be adjusted by adjusting the alcohol concentration in the second cake in the method of producing the powder according to the present invention, which is described later. For example, the amount of carbon dioxide desorbed after the heat treatment can be adjusted to 80 µmol/g or more by adjusting the alcohol concentration in the second cake to 60% by volume or more. It is noted that the amount of carbon dioxide desorbed after the heat treatment tends to increase, as the alcohol concentration in the second cake increases.

### << Properties of Powder Before Heat Treatment >>

Of the properties of the powder according to the present invention, the properties before the heat treatment will now be described. The powder according to the present invention can have two or more properties of the following properties. It is note that, in the description of the properties after the heat treatment, it is clearly stated that the properties are those after the heat treatment; however, in the description of the properties before the heat treatment, there is a case where it is not clearly stated that the properties are those before the heat treatment.

### < Average Particle Size D50 >

The average particle size D50 (µm) refers to the particle size at which the cumulative volume reaches 50% in a volume-based particle size distribution obtained by a laser diffraction/scattering particle size distribution measurement method. The laser diffraction/scattering particle size distribution measurement method is carried out in accordance with the conditions described in Examples.

The average particle size D50 is preferably 30 µm or less, more preferably 20 µm or less, and still more preferably 15 µm or less.

The lower limit value of the average particle size D50 is usually 0.01 µm, and preferably 0.1 µm, but not particularly limited thereto.

The average particle size D50 can be adjusted by adjusting the alcohol concentration in the second cake in the method of producing the powder according to the present invention, which is described later. For example, the average particle size D50 can be adjusted to 30 µm or less by adjusting the alcohol concentration in the second cake to 60% by volume or more. It is noted that the average particle size D50 tends to decrease, as the alcohol concentration in the second cake increases.

### < Average Particle Size D90 >

The average particle size D90 (µm) refers to the particle size at which the cumulative volume reaches 90% in a volume-based particle size distribution obtained by a laser diffraction/scattering particle size distribution measurement method. The laser diffraction/scattering particle size distribution measurement method is carried out in accordance with the conditions described in Examples.

The average particle size D90 is preferably 60 µm or less, more preferably 50 µm or less, and still more preferably 40 µm or less.

The lower limit value of the average particle size D90 is usually 0.1 µm, and preferably 1.0 µm, but not particularly limited thereto.

The average particle size D90 can be adjusted by adjusting the alcohol concentration in the second cake in the method of producing the powder according to the present invention, which is described later. For example, the average particle size D90 can be adjusted to 60 µm or less by adjusting the alcohol concentration in the second cake to 60% by volume or more. It is noted that the average particle size D90 tends to decrease, as the alcohol concentration in the second cake increases.

### < Bulk Density >

The bulk density (g/mL) is the mass (g) per unit volume (1 mL), as measured in accordance with JIS K-5101-12-2:2004.

The bulk density is preferably 0.40 g/mL or less, more preferably 0.35 g/mL or less, and still more preferably 0.30 g/mL or less.

The lower limit value of the bulk density is usually 0.1 g/mL, and preferably 0.2 g/mL or more, but not particularly limited thereto.

The bulk density can be adjusted by adjusting the alcohol concentration in the second cake in the method of producing the powder according to the present invention, which is described later. For example, the bulk density can be adjusted to 0.40 g/mL or less by adjusting the alcohol concentration in the second cake to 60% by volume or more. By calcining the second cake after adjusting the alcohol concentration in the second cake, the average particle size is decreased, making it more susceptible to cracking. As a result, the bulk density can be more easily adjusted. It is noted that the bulk density tends to decrease, as the alcohol concentration in the second cake increases.

### < Tap Density >

The tap density (g/mL) is the mass (g) per unit volume (1 mL), as measured in accordance with the method described in Examples.

The tap density is preferably 0.4 g/mL or less, more preferably 0.38 g/mL or less, and still more preferably 0.35 g/mL or less.

The lower limit value of the tap density is usually 0.1 g/mL, and preferably 0.2 g/mL or more, but not particularly limited thereto.

The tap density can be adjusted by adjusting the alcohol concentration in the second cake in the method of producing the powder according to the present invention, which is described later. For example, the tap density can be adjusted to 0.4 g/mL or less by adjusting the alcohol concentration in the second cake to 60% by volume or more. By calcining the second cake after adjusting the alcohol concentration in the second cake, the average particle size is decreased, making it more susceptible to cracking. As a result, the tap density can be more easily adjusted. It is noted that the tap density tends to decrease, as the alcohol concentration in the second cake increases.

Since the tap density correlates with the bulk density, the tap density can be used as an index instead of the bulk density. The tap density is preferred, because the tap density can be measured more easily than the bulk density.

### << Exhaust Gas Purification Catalyst Composition >>

The exhaust gas purification catalyst composition according to the present invention contains the powder according to the present invention, and one or two or more noble metal elements.

Examples of the noble metal element include palladium element (Pd), platinum element (Pt), rhodium element (Rh) and the like. In one embodiment, the exhaust gas purification catalyst composition according to the present invention contains a noble metal element in the form of a salt of the noble metal element, wherein the salt is a supply source of the noble metal element. The salt of the noble metal element may be, for example, a nitrate, an ammine complex salt, a chloride or the like.

The content of the noble metal element in the exhaust gas purification catalyst composition according to the present invention is preferably 0.1% by mass or more and 40% by mass or less, more preferably 0.1% by mass or more and 30% by mass or less, and still more preferably 0.1% by mass or more and 20% by mass or less, based on the total mass of the powder according to the present invention and the noble metal element. The amount of the noble metal element can be measured using a conventional method, such as inductively coupled plasma atomic emission spectrophotometry (ICP-AES).

The form of the exhaust gas purification catalyst composition according to the present invention is not particularly limited as long as the catalyst composition contains the powder according to the present invention and a noble metal element. In one embodiment, the exhaust gas purification catalyst composition according to the present invention is in the form of a liquid, for example, in the form of a dispersion liquid containing the powder according to the present invention and a salt of a noble metal element. In this embodiment, the salt of the noble metal element (including a noble metal ion produced by the electrolytic dissociation of the salt of the noble metal element) is preferably impregnated into the particles constituting the powder according to the present invention.

The dispersion liquid has any of various viscosities depending on the content of the powder according to the present invention, and takes any of various forms, such as an ink, a slurry or a paste, depending on the viscosity. The dispersion liquid is preferably in the form of a slurry. When the dispersion liquid is a slurry, the content of the powder according to the present invention in the dispersion liquid is preferably 0.1% by mass or more and 80% by mass or less, more preferably 1.0% by mass or more and 60% by mass or less, and still more preferably 3.0% by mass or more and 40% by mass or less, based on the total mass of the dispersion liquid.

Examples of the dispersion medium contained in the dispersion liquid include water, organic solvents and the like. The dispersion medium may be a single solvent, or may be a mixture of two or more solvents. The mixture of two or more solvents may be, for example, a mixture of water and one or two or more organic solvents, a mixture of two or more organic solvents, or the like. Examples of the organic solvent include alcohols, acetone, dimethyl sulfoxide, dimethylformamide and the like.

The exhaust gas purification catalyst composition according to the present invention may contain a carrier component. The carrier component is preferably a porous material. Examples of the carrier component include oxides (Re₂O₃) of rare earth metals (such as Al₂O₃, ZrO₂, SiO₂, TiO₂ and La₂O₃), zeolite (aluminosilicate), oxides based on MgO, ZnO, SnO₂ or the like, and the like. Preferred examples of the carrier component include alumina, silica, silica-alumina, alumino-silicates, alumina-zirconia, alumina-chromia, alumina-ceria and the like.

The exhaust gas purification catalyst composition according to the present invention may contain a stabilizer. The stabilizer may be, for example, an alkaline earth metal compound or the like. Examples of the alkaline earth metal element include Sr (strontium element), Ba (barium element) and the like. Among these, Ba is preferred, from the viewpoint that Ba allows the temperature at which PdOₓ is reduced to be the highest, namely, PdOₓ is less easily reduced. Examples of the alkaline earth metal compound include nitrates, carbonates, oxides, sulfates and the like, of alkaline earth metal elements.

The exhaust gas purification catalyst composition according to the present invention may contain a binder component. The binder component may be, for example, an inorganic-based binder, such as alumina sol.

The exhaust gas purification catalyst composition according to the present invention can be used as a material for producing an exhaust gas purification catalyst including the powder according to the present invention, and a noble metal element supported on the powder according to the present invention.

### << Exhaust Gas Purification Catalyst >>

The exhaust gas purification catalyst according to the present invention includes the powder according to the present invention, and one or two or more noble metal elements supported on the powder according to the present invention. Examples of the noble metal element include palladium element (Pd), platinum element (Pt), rhodium element (Rh) and the like. Such a noble metal element is supported on the powder according to the present invention in a form capable of functioning as a catalytically-active component, for example, in the form of a noble metal, an alloy containing the noble metal element, a compound containing the noble metal element (such as an oxide of the noble metal element), or the like. The catalytically-active component is preferably in the form of particles, from the viewpoint of enhancing the exhaust gas purification performance. The amount of the noble metal element supported is preferably 0.1% by mass or more and 40% by mass or less, more preferably 0.1% by mass or more and 30% by mass or less, and still more preferably 0.1% by mass or more and 20% by mass or less, based on the total mass of the powder according to the present invention and the noble metal element supported on the powder according to the present invention. The amount of the noble metal element supported can be determined by measuring the mass of the noble metal element in a solution obtained by dissolving the catalyst by alkali fusion or the like, using a conventional method such as inductively coupled plasma atomic emission spectrophotometry (ICP-AES). It is noted that the mass of the noble metal element is the mass in terms of noble metal.

The term "supported" refers to a state in which a noble metal element is physically or chemically absorbed or retained on the outer surface or on the inner surface of the pores of the particles constituting the powder according to the present invention. The fact that a noble metal element is supported on the powder according to the present invention can be confirmed, for example, based on the fact that the powder according to the present invention and the noble metal element are present in the same region in an element mapping obtained by analyzing a cross section of the exhaust gas purification catalyst according to the present invention by EDS (energy dispersive spectrometer).

The exhaust gas purification catalyst according to the present invention may contain components other than the powder according to the present invention and a noble metal element (hereinafter, referred to as "other components"). The other components are the same as those mentioned for the exhaust gas purification catalyst composition according to the present invention, and may be, for example, a carrier component, a stabilizer, a binder component or the like. The descriptions of the other components are the same as described above, and thus are omitted.

In one embodiment, the exhaust gas purification catalyst according to the present invention is a compact in the form of pellets or the like. The exhaust gas purification catalyst according to this embodiment can be produced, for example, by mixing the powder according to the present invention and a noble-metal-salt-containing solution, followed by drying and calcination. The mixing allows the particles constituting the powder according to the present invention to be impregnated with the noble-metal-salt-containing solution. The noble metal salt may be, for example, a nitrate, an ammine complex salt, a chloride or the like. The solvent contained in the noble-metal-salt-containing solution is usually water (such as ion exchanged water). The noble-metal-salt-containing solution may contain one or two or more solvents other than water. Examples of the solvent other than water include organic solvents such as alcohols, acetone, dimethyl sulfoxide and dimethylformamide. The drying temperature is usually 50°C or higher and 200°C or lower, and preferably 90°C or higher and 150°C or lower; and the drying time is usually 1 hour or more and 100 hours or less, and preferably 3 hours or more and 48 hours or less. The calcination temperature is usually 300°C or higher and 900°C or lower, and preferably 400°C or higher and 700°C or lower; and the calcination time is usually 1 hour or more and 24 hours or less, and preferably 1.5 hours or more and 10 hours or less. The calcination can be carried out, for example, in an air atmosphere.

In another embodiment, the exhaust gas purification catalyst according to the present invention includes a substrate, and a catalyst layer formed on the substrate, wherein the catalyst layer contains the powder according to the present invention, and a noble metal element supported on the powder according to the present invention.

The substrate can be selected as appropriate from substrates used in known exhaust gas purification catalysts. Examples of the material of the substrate include ceramics such as alumina (Al₂O₃), mullite (3Al₂O₃-2SiO₂), cordierite (2MgO-2Al₂O₃-5SiO₂), aluminum titanate (Al₂TiO₅) and silicon carbide (SiC), and metallic materials such as stainless steel. The substrate may be, for example, in the form of a honeycomb, pellets or spheres. In the case of using a substrate in the form of a honeycomb, for example, it is possible to use a monolithic substrate having a number of parallel, fine gas flow paths, namely, channels, in the interior of the substrate, such that a fluid passes through the interior of the substrate.

The catalyst layer can be formed by coating the exhaust gas purification catalyst composition according to the present invention on the surface of the substrate, followed by drying and calcination. In the case of using a monolithic substrate, for example, it is possible to form a catalyst layer on the surface of the inner wall of each channel in the monolithic substrate, by coating the exhaust gas purification catalyst composition according to the present invention on the surface of the inner wall of each channel in the monolithic substrate, followed by drying and calcination. The catalyst layer can also be formed by a method in which the exhaust gas purification catalyst composition according to the present invention is coated on the surface of the substrate, followed by drying and calcination, to obtain a layer, and the resulting layer is impregnated with a noble-metal-salt-containing solution, followed by drying and calcination. The drying temperature is usually 50°C or higher and 200°C or lower, and preferably 90°C or higher and 120°C or lower; and the drying time is usually 0.1 hours or more and 3.0 hours or less, and preferably 0.1 hours or more and 2.0 hours or less. The calcination temperature is usually 300°C or higher and 900°C or lower, and preferably 400°C or higher and 700°C or lower; and the calcination time is usually 1 hour or more and 24 hours or less, and preferably 1.5 hours or more and 10 hours or less. The calcination can be carried out, for example, in an air atmosphere.

The exhaust gas purification catalyst according to the present invention exhibits an excellent purification performance at a low to middle temperature, because the powder according to the present invention is used therein as a catalyst carrier. The purification performance at a low to middle temperature can be evaluated based on the light-off temperature T50. The light-off temperature T50 is the temperature at which the purification efficiency of the catalyst reaches 50%, and is measured in accordance with the conditions described in Examples. The light-off temperature T50 of the exhaust gas purification catalyst according to the present invention is: preferably 250°C or lower, more preferably 240°C or lower, and still more preferably 230°C or lower, regarding the CO purification efficiency; preferably 265°C or lower, more preferably 260°C or lower, more preferably 255°C or lower, and still more preferably 250°C or lower, regarding the hydrocarbon (HC) purification efficiency; and preferably 280°C or lower, more preferably 270°C or lower, and still more preferably 260°C or lower, regarding the NOx purification efficiency. The lower limit value of the light-off temperature T50 is usually 100°C or higher, and preferably 150°C or higher, but not particularly limited thereto.

### << Method of Producing Powder >>

The method of producing the powder according to the present invention includes the steps of:
(a) obtaining a first cake from a slurry, wherein the slurry is obtained from a raw material liquid containing a cerium salt and a zirconium salt by a coprecipitation method;
(b) treating the first cake with an alcohol-containing liquid to obtain a second cake having an alcohol concentration of 60% by volume or more; and
(c) calcining the second cake at a temperature of 600 to 900°C.

The respective steps will now be described.

### < Step (a) >

The step (a) is the step of obtaining a first cake from a slurry, wherein the slurry is obtained from a raw material liquid containing a cerium salt and a zirconium salt by a coprecipitation method.

The cerium salt may be a water-soluble salt or a poorly water-soluble salt, but is preferably a water-soluble salt. Examples of the water-soluble salt of cerium include cerium nitrate, cerium chloride, cerium sulphate, cerium acetate and the like. Among these, cerium chloride is preferred. In the case where a poorly water-soluble salt is used as the cerium salt, it is preferred to use a water-soluble salt as the zirconium salt. Examples of the poorly water-soluble salt of cerium include cerium hydroxide, cerium oxide, cerium carbonate and the like. The concentration of the cerium salt is adjusted such that the content of cerium element in terms of cerium oxide in the CeO₂-ZrO₂-based complex oxide is within a desired range.

The zirconium salt may be a water-soluble salt or a poorly water-soluble salt, but is preferably a water-soluble salt. Examples of the water-soluble salt of zirconium include zirconium oxynitrate, zirconium oxychloride, zirconium nitrate, zirconium chloride, zirconium oxyacetate and the like. Among these, zirconium oxychloride and zirconium chloride are preferred, and zirconium oxychloride is more preferred. In the case where a poorly water-soluble salt is used as the zirconium salt, it is preferred to use a water-soluble salt as the cerium salt. Examples of the poorly water-soluble salt of zirconium include zirconium hydroxide, zirconium sulfate, basic zirconium sulfate, zirconium oxide, zirconium carbonate and the like. The concentration of the zirconium salt is adjusted such that the content of zirconium element in terms of zirconium oxide in the CeO₂-ZrO₂-based complex oxide is within a desired range.

The raw material liquid can contain a water-soluble salt of a metal element other than cerium and zirconium elements (for example, one or two or more metal elements selected from rare earth elements other than cerium element, and from alkaline earth metal elements), depending on the composition the CeO₂-ZrO₂-based complex oxide. Examples of the water-soluble salt of a metal element other than cerium and zirconium elements include nitrates, chlorides, sulfates, acetates and the like. Among these, a chloride is preferred. The concentration of the water-soluble salt of a metal element other than cerium and zirconium elements is adjusted such that the content of the metal element other than cerium and zirconium elements in terms of oxide in the CeO₂-ZrO₂-based complex oxide is within a desired range.

The raw material liquid contains a solvent. The solvent is usually water (such as ion exchanged water). The raw material liquid may contain one or two or more solvents other than water. The one or two or more solvents other than water can be selected, for example, from organic solvents such as alcohols, acetone, dimethyl sulfoxide and dimethylformamide. Specific examples of the alcohol are the same as those of the alcohol-containing liquid, which are described later. The total content of the one or two or more solvents other than water is preferably 30% by volume or less, and more preferably 10% by volume or less, based on the volume of the raw material liquid.

The coprecipitation method can be carried out in accordance with a conventional method. In the coprecipitation method, precipitates (coprecipitation product) containing cerium element, zirconium element, and optionally another metal element (for example, one or two or more metal elements selected from rare earth elements other than cerium element, and from alkaline earth metal elements) are formed by adding a precipitant to the raw material liquid. The precipitant used in the coprecipitation method can be selected as appropriate from known precipitants, depending on the types of the salts contained in the raw material liquid, and the like. Examples of the precipitant include alkalis such as ammonia, sodium hydroxide, potassium hydroxide, tetramethylammonium hydroxide and tetraethylammonium hydroxide. Among these, sodium hydroxide, potassium hydroxide, ammonia and the like are preferred, and sodium hydroxide, potassium hydroxide and the like are more preferred. The additive amount of the precipitant can be adjusted as appropriate, depending on the types of the salts contained in the raw material liquid, the type of the precipitant, and the like. In the case where sodium hydroxide is used as the precipitant, for example, sodium hydroxide can be added in such an amount that the pH of the raw material liquid after the addition of sodium hydroxide is usually 9.0 or more and 14.0 or less, and preferably 10.0 or more and 14.0 or less.

The slurry obtained by the coprecipitation method contains the coprecipitation product and a solvent. The solvent contained in the slurry is derived from the solvent in the raw material liquid. The coprecipitation product contains, for example, a poorly water-soluble salt of cerium, a poorly water-soluble salt of zirconium, and optionally a poorly water-soluble salt of a metal element other than cerium and zirconium elements (for example, one or two or more metal elements selected from rare earth elements other than cerium element, and from alkaline earth metal elements). The types of the poorly water-soluble salts can be determined as appropriate, depending on the types of the salts contained in the raw material liquid, the type of the precipitant used in the coprecipitation method, and the like. Examples of the poorly water-soluble salt include hydroxides, sulfates, carbonates, oxides and the like. In the case where sodium hydroxide is used as the precipitant, for example, the poorly water-soluble salt of cerium and the poorly water-soluble salt of zirconium contained in the coprecipitation product are cerium hydroxide and zirconium hydroxide, respectively.

The first cake can be obtained by subjecting the slurry to solid-liquid separation. The solid-liquid separation can be carried out, for example, by a method such as filtration, centrifugation, decantation or the like. Of these, filtration is preferred. The solid-liquid separation removes the solvent and enables to obtain the first cake. However, the solvent cannot be removed completely, and thus, the first cake contains the remaining solvent.

Before subjecting the first cake to the step (b), the first cake is preferably washed with a washing liquid. It is preferred to use water (such as ion exchanged water) as the washing liquid. By washing the first cake with the washing liquid, a part or the entirety of the solvent in the first cake is replaced with the washing liquid.

### < Step (b) >

The step (b) is the step of treating the first cake with an alcohol-containing liquid to obtain a second cake having an alcohol concentration of 60% by volume or more.

The alcohol-containing liquid contains one or two or more alcohols. Examples of the alcohol include methyl alcohol, ethyl alcohol, n-propyl alcohol, isopropyl alcohol, n-butyl alcohol, s-butyl alcohol, t-butyl alcohol, pentyl alcohol, hexyl alcohol and the like. Among these, methyl alcohol, ethyl alcohol, n-propyl alcohol, 2-propanol, 1-propanol and the like are preferred, and methyl alcohol, ethyl alcohol, n-propyl alcohol and the like are more preferred. When the alcohol-containing liquid contains a single alcohol, the single alcohol is preferably ethyl alcohol; and when the alcohol-containing liquid contains two or more alcohols, the two or more alcohols are preferably ethyl alcohol and one or two or more of other alcohols.

The alcohol concentration in the alcohol-containing liquid is adjusted as appropriate, depending on the alcohol concentration in the second cake that should be achieved. The alcohol concentration in the alcohol-containing liquid is required to be equal to or higher than the alcohol concentration in the second cake that should be achieved. Therefore, the alcohol concentration in the alcohol-containing liquid may be the same as the alcohol concentration in the second cake that should be achieved, or may be higher than the alcohol concentration in the second cake that should be achieved. The upper limit value of the alcohol concentration in the alcohol-containing liquid is not particularly limited. When the alcohol-containing liquid contains two or more alcohols, the alcohol concentration in the alcohol-containing liquid is the total concentration of the two or more alcohols.

When the alcohol-containing liquid contains ethyl alcohol, the ethyl alcohol concentration is preferably 51% by volume or more, more preferably 65% by volume or more, and still more preferably 90% by volume or more, based on the volume of the alcohol-containing liquid. The upper limit value of the ethyl alcohol concentration is usually 100% by volume, but not particularly limited thereto.

The alcohol-containing liquid may contain one or two or more components other than the alcohol(s). Examples of the component other than the alcohol(s) include water, ketones (such as acetone, methyl ethyl ketone (MEK), cyclohexanone, methyl isobutyl ketone, diacetone alcohol, cycloheptanone and diethyl ketone), ethers (such as 1,4-dioxane, dioxolane, diisopropyl ether dioxane and tetrahydrofuran), aliphatic hydrocarbons (such as hexane), alicyclic hydrocarbons (such as cyclohexane), aromatic hydrocarbons (such as toluene and xylene), halogenated carbons (such as dichloromethane and dichloroethane), esters (such as methyl formate, methyl acetate, ethyl acetate, propyl acetate, butyl acetate and ethyl lactate), cellosolves (such as methyl cellosolve, ethyl cellosolve and butyl cellosolve), cellosolve acetates, sulfoxides (such as dimethyl sulfoxide), amides (such as dimethylformamide and dimethylacetamide) and the like.

As the alcohol-containing liquid, it is possible to use, for example, a commercially available denatured alcohol (industrial alcohol) as it is, or diluted with water such as ion exchanged water.

The treatment of the first cake with the alcohol-containing liquid is not particularly limited as long as the first cake can be brought into contact with the alcohol-containing liquid to replace the liquid in the first cake (such as the solvent in the raw material liquid, or the washing liquid) with the alcohol-containing liquid. The treatment can be carried out, for example, by a method of immersing the first cake in the alcohol-containing liquid, a method of mixing the first cake and the alcohol-containing liquid, or the like. The second cake can be obtained by subjecting the first cake after being brought into contact with the alcohol-containing liquid (for example, after dipping the first cake in the alcohol-containing liquid, or after mixing the first cake and the alcohol-containing liquid), to solid-liquid separation. The solid-liquid separation can be carried out, for example, by a method such as filtration, centrifugation, decantation or the like. Of these, filtration is preferred. The solid-liquid separation removes the alcohol-containing liquid and enables to obtain the second cake. However, the alcohol-containing liquid cannot be removed completely, and thus, the second cake contains the remaining alcohol-containing liquid. By carrying out the treatment of the first cake with the alcohol-containing liquid repeatedly, the alcohol concentration in the second cake gets closer to, and finally coincides with, the alcohol concentration in the alcohol-containing liquid. Therefore, in the case where the alcohol concentration in the alcohol-containing liquid is the same as the alcohol concentration in the second cake that should be achieved, the treatment of the first cake with the alcohol-containing liquid is carried out repeatedly until the alcohol concentration in the second cake coincides with the alcohol concentration in the alcohol-containing liquid. On the other hand, in the case where the alcohol concentration in the alcohol-containing liquid is higher than the alcohol concentration in the second cake that should be achieved, the treatment of the first cake with the alcohol-containing liquid is carried out repeatedly until the alcohol concentration in the second cake reaches the target alcohol concentration.

The alcohol concentration in the second cake is 60% by volume or more. The alcohol concentration in the second cake is preferably 70% by volume or more, more preferably 80% by volume or more, and still more preferably 88% by volume or more. The alcohol concentration in the second cake is adjusted, taking into consideration the properties (such as the oxygen storage capacity (capacity to absorb and release oxygen), the pore volume with from-10-to-100-nm diameters after the heat treatment, the amount of carbon dioxide desorbed after the heat treatment, the average particle size D50, the average particle size D90, the bulk density and the like) that are required for the powder according to the present invention.

The alcohol concentration in the second cake is defined by the alcohol concentration in the alcohol-containing liquid after being used in the treatment of the first cake. Specifically, after bringing the first cake into contact with the alcohol-containing liquid (for example, after dipping the first cake in the alcohol-containing liquid, or after mixing the first cake and the alcohol-containing liquid), the alcohol concentration in the filtrate or the discharged liquid obtained by solid-liquid separation is measured, and the measured alcohol concentration in the filtrate or the discharged liquid is defined as the alcohol concentration in the second cake.

The alcohol concentration can be measured in accordance with a conventional method. For example, the alcohol concentration in the alcohol-containing liquid can be determined by: preparing a conversion table between alcohol concentrations in the alcohol-containing liquids and the corresponding specific gravities of the alcohol-containing liquids, in advance; measuring the specific gravity of the alcohol-containing liquid of interest; and calculating the alcohol concentration in the alcohol-containing liquid based on the measured specific gravity. The specific gravity of the alcohol-containing liquid can be measured, for example, by a float type hydrometer. The specific gravity of the alcohol-containing liquid is measured, for example, at a temperature of 15°C. Regarding the measurement of the specific gravity and the conversion of the specific gravity to the alcohol concentration, it is possible to refer to JIS B 7548: 2009 (Alcohol hydrometers - Metrological and technical requirements and tests), Annex A (Regulations) "International alcoholometric tables".

The second cake is preferably dried before subjecting the second cake to the step (c). The drying can be carried out in accordance with a conventional method. The drying temperature is usually 60°C or higher and 200°C or lower, and preferably 80°C or higher and 130°C or lower; and the drying time is usually 1 hour or more and 24 hours or less, and preferably 2 hours or more and 12 hours or less.

### < Step (c) >

The step (c) is the step of calcining the second cake at a temperature of 600 to 900°C.

The calcination of the second cake can be carried out in accordance with a conventional method. The calcination of the second cake is carried out, for example, in an air atmosphere. The calcination temperature is usually 600°C or higher and 900°C or lower, and preferably 600°C or higher and 800°C or lower. The calcination time is usually 1 hour or more and 12 hours or less, and preferably 1 hour or more and 6 hours or less.

The CeO₂-ZrO₂-based complex oxide obtained in the step (c) is pulverized as necessary. The pulverization can be carried out in accordance with a conventional method. The pulverization can be carried out by a dry process or a wet process, using, for example, a mortar, a hammer mill, a ball mill, a bead mill, a jet mill, a roller mill or the like.

### EXAMPLES

The present invention will now be described in further detail, by way of Examples and Comparative Examples.

### [Preparation of Alcohol-containing Liquids]

Using a denatured alcohol (CS solve NM-85; manufactured by Chusei Oil Co., Ltd.) and ion exchanged water, alcohol-containing liquids having alcohol concentrations (volume percentage concentration) of 47% by volume, 72% by volume, 86% by volume, 91% by volume and 95% by volume were prepared. The specific gravities (15/15°C) of the respective alcohol-containing liquids were measured by a float type hydrometer, and a conversion table between the specific gravities (15/15°C) and the alcohol concentrations (% by volume) was prepared. The composition of the denatured alcohol was composed of ethyl alcohol: 85.5% by weight, methyl alcohol: 5% by weight, and n-propyl alcohol: 9.5% by weight.

### [Example 1]

### (1) Preparation of CeO₂-ZrO₂-based Complex Oxide Powder

97.9 g of an aqueous solution of zirconium oxychloride (the amount of Zr in terms of ZrO₂: 20 g), 74.6 g of an aqueous solution of cerium chloride (the amount of Ce in terms of CeO₂: 16 g), 3.3 g of an aqueous solution of lanthanum chloride (the amount of La in terms of La₂O₃: 0.8 g), 6.8 g of an aqueous solution of neodymium chloride (the amount of Nd in terms of Nd₂O₃: 1.6 g), and 9.1g of an aqueous solution of praseodymium chloride (the amount of Pr in terms of Pr₆O₁₁: 1.6 g) were dissolved in 330 mL of ion exchanged water, and mixed homogeneously in a 1 L beaker, to obtain a raw material liquid. To the raw material liquid, 200 g of a 24% by weight aqueous solution of sodium hydroxide was added over 80 minutes, the resulting mixture was subjected to a neutralization treatment, and a coprecipitation product (precipitates) was allowed to form from the raw material liquid by the coprecipitation method, to obtain a slurry. The slurry was filtered, and the resulting cake was subjected to filtration washing with ion exchanged water. After washing, the cake was treated with the alcohol-containing liquid having an alcohol concentration of 91% by volume, to adjust the alcohol concentration of the cake. Specifically, the cake was dipped in the alcohol-containing liquid having an alcohol concentration of 91% by volume, to replace the water in the cake with the alcohol-containing liquid having an alcohol concentration of 91% by volume. After dipping, the cake was separated from the filtrate by filtration, the specific gravity (15°C/15°C) of the filtrate was measured by a float type hydrometer. Using the conversion table between the specific gravities (15°C/15°C) and the alcohol concentrations (% by volume), the alcohol concentration in the filtrate was calculated from the specific gravity of the filtrate. The alcohol concentration in the filtrate was defined as the alcohol concentration in the cake. The treatment with the alcohol-containing liquid was carried out repeatedly until the alcohol concentration in the filtrate (namely, the alcohol concentration in the cake) reached 91% by volume. After the alcohol concentration in the filtrate (namely, the alcohol concentration in the cake) reached 91% by volume, the cake was dried overnight at 90°C, and calcined in a muffle furnace at 600°C for 3 hours. After calcination, the resulting calcined product was pulverized with a hand mixer (Force Mill FM-1; manufactured by OSAKA CHEMICAL Co., Ltd.), and then sieved at 100 mesh. A CeO₂-ZrO₂-based complex oxide powder was produced by the steps as described above.

### (2) Measurements of Properties of CeO₂-ZrO₂-based Complex Oxide Powder

As the properties of the CeO₂-ZrO₂-based complex oxide powder, the average particle size D50 (µm), the average particle size D90 (µm), the bulk density (g/mL), the tap density (g/mL), the total pore volume (mL/g), the pore volume with from-10-to-100-nm diameters (mL/g) and the amount of CO₂ desorbed (µmol/g) were measured. The average particle size D50 (µm), the average particle size D90 (µm), the bulk density (g/mL) and the tap density (g/mL) were measured before performing a heat treatment on the CeO₂-ZrO₂-based complex oxide powder; and the total pore volume (mL/g), the pore volume with from-10-to-100-nm diameters (mL/g) and the amount of CO₂ desorbed (µmol/g) were measured after performing a heat treatment on the CeO₂-ZrO₂-based complex oxide powder. The heat treatment on the CeO₂-ZrO₂-based complex oxide powder was carried out by heating the CeO₂-ZrO₂-based complex oxide powder at 1,000°C for 3 hours in an air atmosphere. The methods of measuring the respective properties are as follows, and the measured results of the respective properties are as shown in Table 1.

### < D50 and D90 >

Using an automatic sample feeder ("Microtrac SDC" manufactured by Nikkiso Co., Ltd.) for a laser diffraction particle size distribution measuring apparatus, a powder sample was introduced into a water-soluble solvent, and irradiated with a 40 W ultrasound for 360 seconds, under a flow rate of 40%. Thereafter, the volume-based particle size distribution was measured, using a laser diffraction particle size distribution measuring apparatus "Microtrac MT3300 II", manufactured by Nikkiso Co., Ltd., and the particle sizes (µm) at which the cumulative volume reaches 50% and 90% were determined from the volume-based particle size distribution. The measurement was carried out twice, and the mean value of the particle sizes (µm) at which the cumulative volume reaches 50% was defined as the average particle size D50 (µm), and the mean value of the particle sizes (µm) at which the cumulative volume reaches 90% was defined as the average particle size D90 (µm). The measurement was carried out under the following conditions: particle refractive index: 1.5, particle shape: true sphere, solvent refractive index: 1.3, set zero: 30 seconds, measurement time: 30 seconds.

### < Bulk Density >

In accordance with JIS K-5101-12-2: 2004, a funnel was attached to a funnel stand, a sieve was placed on the funnel, and a receiver was properly placed on a receiver stand. One spoonful of a powder sample was placed on the sieve. Then the entire surface of the sieve with a 0.5 mm mesh was brushed evenly and lightly with a brush to allow the powder sample to be dispersed and to fall, and the powder passed through the sieve was received in the receiver having a 30 mL capacity. This operation was repeated until the powder sample was piled up in the receiver, and the piled-up portion of the powder was scraped with a spatula whose one side is straight. Thereafter, the weight of the content of the receiver was measured, and the bulk density (g/mL) was calculated, based on the equation: E = F/30 (wherein E represents the bulk density (g/mL), and F represents the weight (g) of the powder sample in the receiver).

### < Tap Density>

A powder sample was introduced into a 50 mL graduated cylinder whose weight had been measured in advance, the bottom of the graduated cylinder was tapped 10 times to give impacts, so that the upper plane of the powder sample was leveled and the powder sample was packed in the cylinder. The volume (mL) of the powder sample was measured from the scale on the graduated cylinder, the weight (g) of the powder sample was measured using a balance, and the tap density (the weight (g) of the powder sample / the volume (mL) of the powder sample) was calculated.

### < Total Pore Volume and Pore Volume with From-10-To-100-nm Diameters >

After the heat treatment of a powder sample, the total pore volume (measurement range: diameter of 10 nm to 100 µm) was measured by mercury intrusion porosimetry, using a pore distribution measuring apparatus (AutoPore IV MIC-9500; manufactured by Shimadzu Corporation). Specifically, the powder sample was filled to about 1/3 of the cell capacity, the lid was closed, and the measurement on the low pressure (from 0 to 30 psia) side was performed. Thereafter, the cell was moved to the high pressure (from atmospheric pressure to 33,000 psia, 228 MPa) side, and the measurement was carried out. From the measured results of the total pore volume, the total volume of pores each having a diameter of 10 to 100 nm (the pore volume with from-10-to-100-nm diameters) was determined.

### < Amount of CO₂ Desorbed >

After the heat treatment of a powder sample, the powder sample was granulated, 0.1 g of the sized sample was introduced into a sample folder, and the measurement (CO₂-TPD) of the amount of CO₂ desorbed by the temperature programmed desorption (TPD) method was carried out. The granulation was carried out at 10 MPa for 30 seconds. The CO₂-TPD was performed as follows. In an atmosphere into which He was introduced at a rate of 50 mL/min, the powder sample was heated to 600°C and maintained at that temperature for 30 minutes, and then cooled to 50°C in a He flow. Thereafter, 100% CO₂ was introduced at 50 mL/min for 30 minutes, to allow CO₂ to adsorb on the sample surface. Subsequently, in an atmosphere into which He was introduced at 50 mL/min after purging with He at 50 mL/min for 40 minutes, the powder sample was heated to 600°C at 10°C/min, and the mass spectrum at a mass number of 44 at this time was analyzed using BELCAT (BELCAT-A-SPM2) manufactured by MicrotracBel Corp., which is an apparatus for determining an adsorption breakthrough curve. Samples for obtaining a CO₂-TPD calibration curve were prepared by physically mixing CaCO₃ and alumina. The samples having CaCO₃ contents of 0%, 2.5% and 5% were prepared, the samples were heated to 800°C at 10°C/min, in an atmosphere into which He was introduced at 50 mL/min, and a calibration curve was prepared from the area values of the mass spectra at a mass number of 44 at this time.

### (3) Preparation of Catalyst

The CeO₂-ZrO₂-based complex oxide powder which had not been heat treated was added to an aqueous solution of palladium nitrate. The resultant was heated while stirring, and then calcined at 600°C for 3 hours in an air atmosphere, to obtain a Pd-supported CeO₂-ZrO₂-based complex oxide powder. The amount of Pd supported was adjusted to 2% by mass, based on the total of the mass of the CeO₂-ZrO₂-based complex oxide powder and the mass of Pd.

### (4) Measurements of Properties of Catalyst

After the heat treatment of the Pd-supported CeO₂-ZrO₂-based complex oxide powder, the light-off temperature T50 was measured, using a fixed-bed flow reactor. The light-off temperature T50 is the temperature at which the purification efficiency of the catalyst reaches 50%. The heat treatment on the Pd-supported the CeO₂-ZrO₂-based complex oxide powder was carried out by heating the Pd-supported CeO₂-ZrO₂-based complex oxide powder at 1,000°C for 3 hours in an air atmosphere. The method of measuring the light-off temperature T50 is as follows, and the measured result of the light-off temperature T50 is as shown in Table 1.

### < Light-off Temperature T50 >

A sample of the Pd-supported CeO₂-ZrO₂-based complex oxide powder was prepared by evaporation drying. The sample was granulated, and 0.1 g of the sized sample was set in a sample tube, with alumina balls filled at the upper part and the lower part of the tube so as to sandwich the sample, in order to facilitate the gas flow. The granulation was carried out at 10 MPa for 30 seconds.

The outlet gas concentration was analyzed, using an FID-type VOC analyzer (VMS-1000F) manufactured by Shimadzu Corporation for the analysis of hydrocarbons (HC), and using a portable gas analyzer (PG-240) manufactured by HORIBA, Ltd., for the analysis of NO/CO/O₂. The gas for evaluation was adjusted to a stoichiometric condition (excess air ratio λ = 1), and the composition thereof was adjusted to CO: 0.39%, NO: 0.05%, C₃H₆: 1,200 ppm, CO₂: 0.4%, H₂: 0.1%, H₂O: 10%, and N₂: the balance.

The measurements were carried out under the following conditions. Specifically, after setting to zero with N₂ gas and then performing a span calibration, the gas for evaluation described above was allowed to flow, and the sample was once heated to 600°C at 10°C/min to perform a pretreatment. Subsequently, the sample was cooled to 100°C, then heated to 600°C at 10°C/min, and the purification efficiency was calculated from the outlet gas concentration. The temperature at which the CO purification efficiency reaches 50% was defined as the light-off temperature T50 regarding the CO purification efficiency; the temperature at which the HC purification efficiency reaches 50% was defined as the light-off temperature T50 regarding the HC purification efficiency; and the temperature at which the NOx purification efficiency reaches 50% was defined as the light-off temperature T50 regarding the NOx purification efficiency. The respective light-off temperatures T50 regarding the CO purification efficiency, the HC purification efficiency and the NOx purification efficiency are as shown in Table 1. The light-off temperatures T50 regarding the HC purification efficiency and the NOx purification efficiency were measured in Example 1, Example 2 and Comparative Example 1, but not in other Examples and Comparative Examples.

### [Example 2]

The production of a CeO₂-ZrO₂-based complex oxide powder and a Pd-supported CeO₂-ZrO₂-based complex oxide powder, and the measurements of the properties thereof were carried out in the same manner as in Example 1, except that an alcohol-containing liquid having an alcohol concentration of 95% by volume was used, instead of the alcohol-containing liquid having an alcohol concentration of 91% by volume. The results are shown in Table 1.

### [Example 3]

The production of a CeO₂-ZrO₂-based complex oxide powder and a Pd-supported CeO₂-ZrO₂-based complex oxide powder, and the measurements of the properties thereof were carried out in the same manner as in Example 1, except that an alcohol-containing liquid having an alcohol concentration of 72% by volume was used, instead of the alcohol-containing liquid having an alcohol concentration of 91% by volume. The results are shown in Table 2.

### [Example 4]

The production of a CeO₂-ZrO₂-based complex oxide powder and a Pd-supported CeO₂-ZrO₂-based complex oxide powder, and the measurements of the properties thereof were carried out in the same manner as in Example 1, except that an alcohol-containing liquid having an alcohol concentration of 86% by volume was used, instead of the alcohol-containing liquid having an alcohol concentration of 91% by volume. The results are shown in Table 2.

### [Example 5]

35.6 g of zirconium oxynitrate (the amount of Zr in terms of ZrO₂: 20 g), 41.2 g of cerium nitrate hexahydrate (the amount of Ce in terms of CeO₂: 16 g), 3.8 g of an aqueous solution of lanthanum nitrate (the amount of La in terms of La₂O₃: 0.8 g), 8.1 g of an aqueous solution of neodymium nitrate (the amount of Nd in terms of Nd₂O₃:1.6 g), and 7.0 g of an aqueous solution of praseodymium nitrate (the amount of Pr in terms of Pr₆O₁₁: 1.6 g) were dissolved in 330 mL of ion exchanged water, and mixed homogeneously in a 1 L beaker, to obtain a raw material liquid. The production of a CeO₂-ZrO₂-based complex oxide powder and a Pd-supported CeO₂-ZrO₂-based complex oxide powder, and the evaluation of the properties thereof were carried out in the same manner as in Example 1, except that the raw material liquid prepared above was used, and that an alcohol-containing liquid having an alcohol concentration of 95% by volume was used. The results are shown in Table 2.

### [Comparative Example 1]

97.9 g of an aqueous solution of zirconium oxychloride (the amount of Zr in terms of ZrO₂: 20 g), and 269 g of ion exchanged water were mixed homogeneously in a 1 L beaker, and the mixture was heated to 85°C. To the resulting mixture, a solution obtained by dissolving 10.7 g of ammonium sulfate in 32.2 g of ion exchanged water was added dropwise. The resulting suspension was introduced into a pressure-resistant container, and subjected to a heat treatment at 140°C for 1 hour under sealing, to allow a sulfatization reaction by ammonium sulfate (sulfatization agent) to proceed to form a basic zirconium sulfate-containing slurry (see Patent Document 3). The slurry was taken out of the pressure-resistant container, and a mixed liquid of 41.2 g of cerium nitrate hexahydrate (the amount of Ce in terms of CeO₂:16 g), 3.8 g of an aqueous solution of lanthanum nitrate (the amount of La in terms of La₂O₃: 0.8 g), 8.1 g of an aqueous solution of neodymium nitrate (the amount of Nd in terms of Nd₂O₃:1.6 g) and 7.0 g of an aqueous solution of praseodymium nitrate (the amount of Pr in terms of Pr₆O₁₁: 1.6 g) was added to the slurry. The proportions of the respective components in the slurry to which the mixed liquid had been added were as follows: the amount of Zr in terms of ZrO₂ = 50% by mass, the amount of Ce in terms of CeO₂ = 40% by mass, the amount of La in terms of La₂O₃ = 2% by mass, the amount of Nd in terms of Nd₂O₃ = 4% by mass, and the amount of Pr in terms of Pr₆O₁₁ = 4% by mass. The resulting slurry was heated to 40°C, and 200 g of a 24% aqueous solution of sodium hydroxide was added thereto over 80 minutes, to perform a neutralization treatment. Thereafter, the neutralized slurry was matured for 2 hours, 7.9 g of a 35% hydrogen peroxide water was added thereto, and the resultant was stirred and maturated for 8 hours while maintaining the temperature at 40°C. After filtering the resulting slurry with a Nutsche, the slurry was subjected to filtration washing with ion exchanged water adjusted to 40 to 50°C, until the Na ion concentration reached 0 ppm, and the electric conductivity reached 1 mS/m or less. The resulting cake was dried overnight at 90°C, and then calcined in a muffle furnace at 600°C for 3 hours. After calcination, the resulting calcined product was pulverized with a hand mixer (Force Mill FM-1; manufactured by OSAKA CHEMICAL Co., Ltd.), and then sieved at 100 mesh. The evaluation of the properties of a CeO₂-ZrO₂-based complex oxide powder, as well as the production of a Pd-supported CeO₂-ZrO₂-based complex oxide powder and the evaluation of the properties thereof were carried out in the same manner as in Example 1, except that the CeO₂-ZrO₂-based complex oxide powder was produced by the steps as described above. The results are shown in Table 1.

### [Comparative Example 2]

The production of a CeO₂-ZrO₂-based complex oxide powder and a Pd-supported CeO₂-ZrO₂-based complex oxide powder, and the measurements of the properties thereof were carried out in the same manner as in Example 1, except that the cake was not treated with the alcohol-containing liquid (i.e., the alcohol concentration in the cake was not adjusted). The results are shown in Table 2.

### [Comparative Example 3]

The production of a CeO₂-ZrO₂-based complex oxide powder and a Pd-supported CeO₂-ZrO₂-based complex oxide powder, and the measurements of the properties thereof were carried out in the same manner as in Example 1, except that an alcohol-containing liquid having an alcohol concentration of 47% by volume was used, instead of the alcohol-containing liquid having an alcohol concentration of 91% by volume. The results are shown in Table 2.

### [Reference Example]

The production of a CeO₂-ZrO₂-based complex oxide powder and a Pd-supported CeO₂-ZrO₂-based complex oxide powder, and the measurements of the properties thereof were carried out in the same manner as in Comparative Example 1, except that the aqueous solution of praseodymium nitrate was not incorporated into the mixed liquid to be added to the slurry, and that the incorporated amounts of the respective components were changed such that the proportions of the respective components in the slurry to which the mixed liquid had been added were as follows: the amount of Zr in terms of ZrO₂ = 72% by mass, the amount of Ce in terms of CeO₂ = 21% by mass, the amount of La in terms of La₂O₃ = 2% by mass, and the amount of Nd in terms of Nd₂O₃ = 5% by mass. The results are shown in Table 2.

### [Table 1] [0131]

**Table 1**

| | Starting Materials | Alcohol Concentration in Cake | Before Heat Treatment | | | | After Heat Treatment | | | | | |
|---|---|---|---|---|---|---|---|---|---|---|---|---|
| | | | Tap Density (g/mL) | Bulk Density (g/mL) | Particle Size | | Total Pore Volume (mL/g) | Pore Volume with From-10-To-100-nm Diameters (mL/g) | Amount of CO₂ Desorbed (µmol/g) | Light-off Temperature T50 (°C) | | |
| | | | | | D50 (µm) | D90 (µm) | | | | | | |
| | | | | | | | | | | CO | HC | NOx |
| Example 1 | Chlorides | 91 vol% | 0.35 | 0.26 | 10 | 34 | 1.21 | 0.49 | 99 | 220 | 238 | 255 |
| Example 2 | Chlorides | 95 vol% | 0.32 | 0.24 | 9 | 33 | 1.28 | 0.50 | 102 | 215 | 252 | 254 |
| Comparative Example 1 | Chloride | 0 vol% | 0.72 | - | 56 | 121 | 0.67 | 0.23 | 80 | 251 | 268 | 283 |

### [Table 2] [0132]

**Table 2**

| | Starting Materials | Alcohol Concentration in Cake | Before Heat Treatment | | | | After Heat Treatment | | | |
|---|---|---|---|---|---|---|---|---|---|---|
| | | | Tap Density (g/mL) | Bulk Density (g/mL) | Particle Size | | Total Pore Volume (mL/g) | Pore Volume with From-10-To-100-nm Diameters (mL/g) | Amount of CO₂ Desorbed (µmol/g) | Light-off Temperature T50 (°C) |
| | | | | | D50 (µm) | D90 (µm) | | | | |
| | | | | | | | | | | CO |
| Example 3 | Chlorides | 72 vol% | 0.50 | - | 28 | 53 | 1.21 | 0.46 | 92 | 246 |
| Example 4 | Chlorides | 86 vol% | 0.33 | 0.33 | 19 | 42 | 1.11 | 0.50 | 98 | 248 |
| Example 5 | Nitrates | 95 vol% | 0.30 | - | 12 | 34 | 1.90 | 0.45 | 80 | 250 |
| Comparative Example 2 | Chlorides | 0 vol% | 0.80 | 0.55 | 32 | 84 | 0.67 | 0.33 | 90 | 268 |
| Comparative Example 3 | Chlorides | 47 vol% | 0.62 | - | 52 | 116 | 072 | 0.31 | 91 | 278 |
| Reference Example | Chlorides | 0 vol% | 0.61 | - | 62 | 144 | - | - | 81 | 280 |

As shown in Table 1 and Table 2, it was possible to adjust the properties of the CeO₂-ZrO₂-based complex oxide powder, namely, the average particle size D50 (µm), the average particle size D90 (µm), the bulk density (g/mL), the tap density (g/mL), the pore volume with from-10-to-100-nm diameters (mL/g) after the heat treatment, the amount of CO₂ desorbed (µmol/g) after the heat treatment, and the light-off temperature T50 of the catalyst, by adjusting the alcohol concentration in the cake.

Specifically, by adjusting the alcohol concentration in the cake to 60% by volume or more, it was possible to adjust: the average particle size D50 to 30 µm or less; the average particle size D90 to 60 µm or less; the bulk density to 0.40 g/mL or less; the tap density to 0.4 g/mL or less; the pore volume with from-10-to-100-nm diameters after the heat treatment to 0.35 mL/g or more; the amount of CO₂ desorbed after the heat treatment to 80 µmol/g or more; the light-off temperature T50 regarding the CO purification efficiency of the catalyst to 250°C or lower; the light-off temperature T50 regarding the HC purification efficiency of the catalyst to 265°C or lower; and the light-off temperature T50 regarding the NOx purification efficiency of the catalyst to 280°C or lower.

There was a tendency that the average particle size D50, the average particle size D90, and the bulk density and the tap density decrease, as the alcohol concentration in the cake increase. Further, a correlation between the bulk density and the tap density was observed.

There was a tendency that the total pore volume after the heat treatment and the pore volume with from-10-to-100-nm diameters after the heat treatment increase, as the alcohol concentration in the cake increases. The reason responsible for this is thought be the fact that a higher alcohol concentration in the cake leads to a higher effect of reducing the aggregation of the solid content in the cake, and as a result, meso- and macropores are retained without being broken. For the powder of Reference Example, the total pore volume after the heat treatment and the pore volume with from-10-to-100-nm diameters after the heat treatment were not measured. However, it is thought that the total pore volume and the pore volume with from-10-to-100-nm diameters in Reference Example are the same as those in Comparative Example 1, since the powders of Reference Example were produced in the same manner as in Comparative Example 1, and the alcohol concentration in the cake is 0% by volume.

There was a tendency that the amount of CO₂ desorbed (namely, the amount of base on the surface of the CeO₂-ZrO₂-based complex oxide powder) after the heat treatment increases, as the alcohol concentration in the cake increases. The reason responsible for this is thought be the fact that the surface modification effect of the solid content in the cake increases, as the alcohol concentration in the cake increases, resulting in the appearance of new basic sites.

There was a tendency that the light-off temperature T50 of the catalyst decreases, as the alcohol concentration in the cake increases. The reasons responsible for this are thought be the fact that the amount of basic sites on the catalyst surface increases, as the alcohol concentration in the cake increases, and the fact that the pore volume with from-10-to-100-nm diameters increases, as the alcohol concentration in the cake increases, leading to an improvement in the gas diffusivity.

## Claims

1. A powder of a complex oxide comprising cerium and zirconium elements,
wherein a pore volume with from-10-to-100-nm diameters after a heat treatment performed at 1,000°C for 3 hours in an air atmosphere, is 0.35 mL/g or more, and
wherein an amount of carbon dioxide desorbed after the heat treatment, as measured by a temperature programmed desorption method, is 80 µmol/g or more.

2. The powder according to claim 1, wherein the powder has an average particle size D50 of 30 µm or less.

3. The powder according to claim 1 or 2, wherein the powder has an average particle size D90 of 60 µm or less.

4. The powder according to any one of claims 1 to 3, wherein the powder has a bulk density of 0.40 g/mL or less.

5. The powder according to any one of claims 1 to 4, wherein the complex oxide comprises one or two or more rare earth elements other than cerium element.

6. The powder according to claim 5, wherein the total content of the one or two or more rare earth elements other than cerium element, in terms of oxides, is 0.1% by mass or more and 40% by mass or less, based on the mass of the powder.

7. An exhaust gas purification catalyst composition, comprising:
the powder according to any one of claims 1 to 6, and;
a noble metal element.

8. An exhaust gas purification catalyst, comprising:
the powder according to any one of claims 1 to 6; and
a noble metal element supported on the powder.

9. A method of producing the powder according to any one of claims 1 to 6, the method comprising the steps of:
(a) obtaining a first cake from a slurry, wherein the slurry is obtained from a raw material liquid containing a cerium salt and a zirconium salt by a coprecipitation method;
(b) treating the first cake with an alcohol-containing liquid to obtain a second cake having an alcohol concentration of 60% by volume or more; and
(c) calcining the second cake at a temperature of 600 to 900°C.
